# FASCICULE DE BREVET EUROPEEN

(11) **EP 3 362 319 B1**
(45) Date de publication et mention de la délivrance du brevet: **05.02.2020**
(21) Numéro de dépôt: 16787505.3
(22) Date de dépôt: 06.10.2016
(51) Int. Cl.: B60R 13/04, B60R 9/04, B62D 29/04, B62D 25/04

(54) **ÉLÉMENT D'HABILLAGE POUR CÔTÉ DE CAISSE DESTINÉ À HABILLER UN MONTANT DE BAIE ET AU MOINS UNE PARTIE D'UN BRANCARD**
VERKLEIDUNGSELEMENT ZUR KAROSSERIESEITIGEN ABDECKUNG EINES FENSTERPFOSTENS UND MINDESTENS EINES ABSCHNITTS EINER SEITLICHEN DACHRELING
TRIM ELEMENT FOR BODY SIDE INTENDED FOR COVERING A WINDOW POST AND AT LEAST ONE PORTION OF A SIDE ROOF RAIL

(30) Priorité: 13.10.2015 FR 1559712
(43) Date de publication de la demande: 22.08.2018
(73) Titulaire: Renault S.A.S., 92100 Boulogne-Billancourt (FR)
(72) Inventeur: BEZEAULT, Loic, 78150 Le Chesnay (FR); DUHEM, Xavier, 92130 Issy Les Moulineaux (FR)
(86) Numéro de dépôt international: PCT/FR2016/052575
(87) Numéro de publication internationale: WO 2017/064395

(56) Documents cités:
- EP-A1- 2 671 780
- DE-A1- 3 441 602
- DE-A1- 3 809 196
- DE-A1-102013 214 782
- DE-A1-102015 205 630
- FR-A1- 2 847 875
- FR-A3- 2 577 490

## Description

### Domaine technique de l'invention

L'invention concerne le domaine des véhicules automobiles.

L'invention a pour objet plus particulièrement un élément d'habillage à reporter sur un côté de caisse du véhicule automobile.

### État de la technique

Il existe un besoin d'alléger l'ensemble de la caisse d'un véhicule automobile pour une meilleure consommation, ou une meilleure longévité des batteries, dudit véhicule automobile. En effet, plus un véhicule est léger, plus il est possible de réduire la consommation d'un groupe moto-propulseur thermique, ou d'augmenter l'autonomie de la batterie dans une version d'un groupe moto-propulseur électrique.

Cette démarche d'allègement des véhicules automobiles peut permettre de réduire la taille des moteurs, la taille des batteries à iso volume d'architecture voire une réduction de ce volume.

La caisse standard d'un véhicule est complexe par le nombre important de pièces en tôle et des liaisons de contacts et d'assemblage.

Par ailleurs, selon la forme extérieure souhaitée du véhicule, le côté de caisse peut être complexe à réaliser.

Les solutions actuelles ne permettent pas de réduire au maximum la masse du véhicule, et restent dans le monde des matériaux métalliques. L'assemblage des nombreuses pièces métalliques complexifie l'assemblage associé : par soudage, rivetage ou clinchage.

La caisse d'un véhicule est soumise à des tenues mécaniques et acoustiques telles que la raideur globale, la raideur en torsion, un 1^{er} mode propre (fréquence modale).

Cette même caisse peut être soumise en cas d'accident à un choc latéral, un choc arrière, à un retournement, et à des tenues sous contraintes (exemple des sièges et des ancrages ceintures).

Pour répondre aux contraintes du domaine des véhicules automobiles, il faut une caisse solide avec des zones plus raides et des zones renforcées localement. DE 10 2013 214 782 A1 décrit une caisse en matériau composite rigidifiée par une poutre interne. FR 2 847 875 décrit un élément d'habillage selon le préambule de la revendication 1.

En ce sens, il existe un besoin de développer de nouvelles solutions en gardant à l'esprit que l'on souhaite limiter le poids final du véhicule automobile.

### Objet de l'invention

Le but de la présente invention est de proposer une solution qui remédie à tout ou partie des inconvénients listés ci-dessus.

On tend vers ce but grâce à un élément d'habillage pour véhicule automobile, comprenant les caractéristiques de la revendication 1.

Notamment, l'élément d'habillage présente une longueur telle qu'assemblé au véhicule automobile il se prolonge à minima jusqu'à une zone d'interface avec un pied milieu de la caisse du véhicule automobile, et notamment à maxima jusqu'à une gouttière arrière d'une porte de coffre du véhicule automobile.

Selon une réalisation, l'élément d'habillage comporte, ou est, une barre longitudinale destinée au transport d'objets au-dessus d'un pavillon de toit du véhicule automobile, notamment tout en étant une pièce d'aspect contribuant au style du véhicule.

L'invention est aussi relative à un agencement pour véhicule automobile comprenant les caractéristiques de la revendication 4.

De préférence, la doublure de côté de caisse est assemblée au côté de caisse par l'intermédiaire d'au moins un premier cordon de colle de liaison, et l'élément d'habillage est assemblé au côté de caisse par l'intermédiaire d'au moins un deuxième cordon de colle de liaison.

En particulier, les premier et deuxième cordons de colle de liaison peuvent être disposés de manière à minimiser l'encombrement de l'agencement au moins au niveau du montant de baie, les premier et deuxième cordons de colle au niveau du montant de baie étant décalés de part et d'autre d'un axe parallèle à un axe transversal au véhicule automobile dans une configuration où l'agencement intègre le véhicule automobile.

Avantageusement, au moins au niveau du montant de baie, chaque premier cordon de colle, ou au moins l'un des premiers cordons de colle, présente une face de contact avec le côté de caisse, et en tout point de la face de contact la droite normale à ladite face de contact et passant par ledit point ne présente pas d'intersection avec le deuxième cordon de colle ou au moins l'un des deuxièmes cordons de colles, et préférentiellement avec chacun des deuxièmes cordons de colle.

Selon une réalisation, ladite au moins une partie du brancard s'étend d'une extrémité du montant de baie située à l'interface avec une traverse supérieure de baie et se prolonge à minima jusqu'à une zone d'interface avec un pied milieu de la caisse du véhicule automobile, et notamment à maxima jusqu'à une gouttière arrière de la porte de coffre.

Préférentiellement, le côté de caisse est une pièce en matériau composite, notamment monolithique, et/ou en ce que la doublure de côté de caisse est une pièce en matériau composite, notamment monolithique.

Selon une mise en œuvre, l'élément d'habillage est aussi une pièce de renfort participant à l'absorption des chocs en cas d'accident, ledit élément d'habillage délimitant avec le côté de caisse au moins un corps creux.

L'invention est aussi relative à un véhicule automobile comportant un agencement tel que décrit.

L'invention est aussi relative à un procédé d'assemblage d'un agencement comprenant les caractéristiques de la revendication 12.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 est une vue en perspective d'une caisse de véhicule automobile,
- la figure 2 est une vue de la figure 1 centrée sur le montant de baie et le brancard de la caisse de véhicule automobile de la figure 1,
- la figure 3 illustre un élément d'habillage selon un mode d'exécution de l'invention,
- la figure 4 illustre une coupe d'un agencement du véhicule automobile au niveau du montant de baie, selon une coupe C1 rendue visible à la figure 2,
- la figure 5 illustre une coupe d'un agencement du véhicule automobile au niveau du brancard avant, selon une coupe C2 rendue visible à la figure 2,
- la figure 6 illustre une coupe d'un agencement du véhicule automobile au niveau du brancard arrière, selon une coupe C3 rendue visible à la figure 2,
- la figure 7 illustre une coupe d'un agencement du véhicule automobile au niveau d'une custode arrière, selon une coupe C4 rendue visible à la figure 2,
- la figure 8 illustre une partie arrière du véhicule automobile équipé d'un élément d'habillage particulier s'étendant jusqu'à une gouttière arrière de porte de coffre, selon une vue de dessus d'une partie arrière gauche de la caisse de véhicule automobile de la figure 1.

### Description de modes préférentiels de l'invention

Ce qui va être décrit ci-après diffère de l'art antérieur notamment en ce que l'on va utiliser une pièce d'habillage en un nouveau matériau pour former une partie de la caisse du véhicule automobile. Il est notamment alors utilisé un matériau composite.

Au préalable, quelques définitions vont être données pour permettre une meilleure compréhension de l'invention et de sa zone d'application.

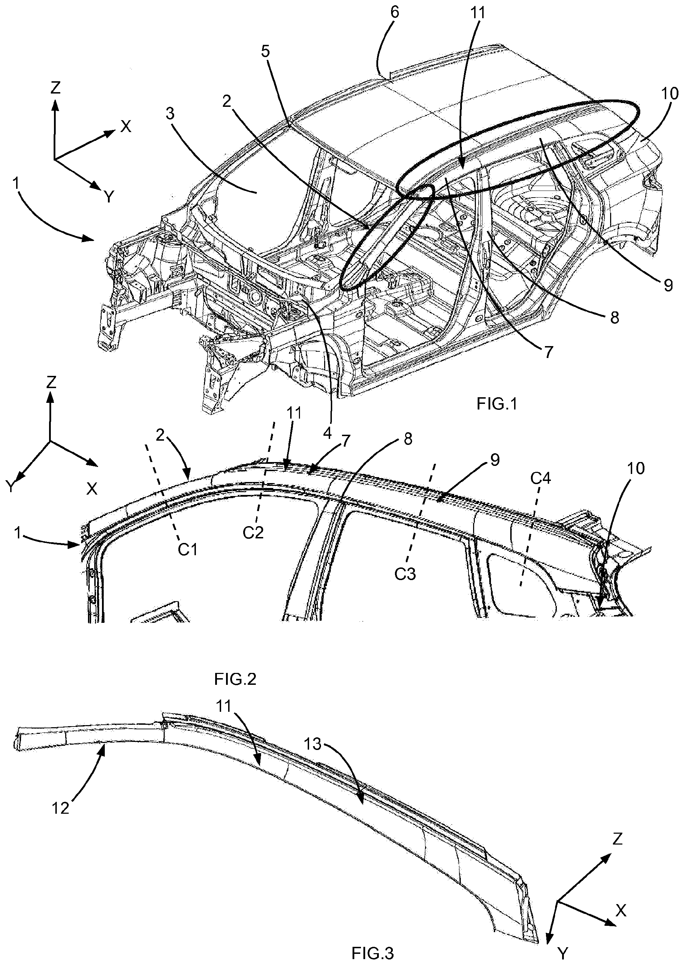

Aux figures 1 à 8, il est représenté un repère orthonormé XYZ. Ce repère correspond au référentiel du véhicule automobile lorsque ce dernier repose sur le sol, et pour lequel X est orienté vers l'arrière du véhicule automobile et sensiblement parallèle à un axe longitudinal du véhicule automobile, Y est orienté vers un côté latéral du véhicule et sensiblement parallèle à un axe latéral du véhicule, et Z est orienté vers le haut et sensiblement parallèle à un axe vertical du véhicule. En ce sens, aux figures 1 à 8, le repère XYZ permet d'illustrer un agencement préféré de ce qui est représenté auxdites figures lorsque ce qui est représenté est monté audit véhicule automobile.

La figure 1 illustre une caisse 1 de véhicule automobile, et la figure 2 une partie de cette caisse qui nous intéresse plus particulièrement dans le cadre de la présente invention.

Un montant de baie 2 est une partie de la caisse 1 qui s'étend le long d'une ouverture 3 destinée à recevoir le pare-brise avant du véhicule automobile. Le montant de baie 2 s'étend notamment dans sa longueur selon l'axe longitudinal X. En particulier, le montant de baie 2 s'étend de manière inclinée par rapport à l'horizontal (plan XY) du véhicule automobile entre une zone de compartiment 4 moteur et une traverse supérieure 5 délimitant une partie de l'ouverture 3 destinée à recevoir le pare-brise avant du véhicule automobile.

Le brancard 6 est une partie de la caisse qui s'étend dans le prolongement du montant de baie 2, notamment au niveau de la traverse supérieure 5, vers l'arrière du véhicule automobile. Généralement, le brancard 6 comporte une partie appelée brancard avant 7 qui s'étend depuis une extrémité supérieure du montant de baie 2 jusqu'à une zone de pied milieu 8 de la caisse. En outre, le brancard 6 peut comprendre aussi une partie appelée brancard arrière 9 qui forme le prolongement du brancard avant 7 depuis le pied milieu 8 jusqu'à une gouttière arrière 10 de la porte de coffre.

Dans le cadre d'une caisse prise dans sa globalité, elle comporte généralement deux montants de baie 2 et deux brancards 6 similaires au de plan de symétrie près, destinés à former respectivement une partie latérale droite de la caisse et une partie latérale gauche de la caisse. Autrement dit, tout ce qui s'applique à un montant de baie en particulier et/ou à un brancard en particulier dans la présente description peut s'appliquer indifféremment à une partie latérale droite et/ou gauche du véhicule automobile.

De manière préférée, le montant de baie 2 et tout ou partie du brancard 6 comportent au moins une doublure de caisse, un côté de caisse et un élément d'habillage.

La doublure de caisse est une pièce rigide destinée usuellement à former la structure de la caisse.

Le côté de caisse est une pièce rapportée sur la doublure de caisse du côté extérieur du véhicule automobile. Ce côté de caisse forme usuellement la carrosserie extérieure visible par un observateur se tenant à l'extérieur du véhicule automobile. Dans le cadre de la présente invention, un élément d'habillage va recouvrir au moins une partie de ce côté de caisse pour former une partie de la carrosserie extérieure du véhicule automobile, le cas échéant une autre partie du côté de caisse non recouverte pourra former une partie correspondante de la carrosserie extérieure. De préférence, l'assemblage du côté de caisse avec la doublure de côté de caisse peut former d'un seul tenant au moins un encadrement de porte latérale avant du véhicule automobile.

Comme évoqué ci-dessus, l'élément d'habillage est une pièce rapportée sur le côté de caisse pour participer à la perception du design extérieur du véhicule automobile. Autrement dit, il s'agit d'une pièce d'aspect visible par le client, mais qui, comme nous le verrons par la suite, peut aussi apporter une fonction de rigidité à la caisse du véhicule automobile pour améliorer la sécurité. Ainsi, l'élément d'habillage dans la présente description peut aussi selon les cas être qualifié de pièce structurelle d'habillage. L'élément d'habillage peut être recouvert d'une couche de peinture ou d'un film autocollant afin de personnaliser le véhicule automobile.

En ce sens, comme illustré aux figures 1 à 3, l'invention est relative à un élément d'habillage 11 pour véhicule automobile. Cet élément d'habillage 11 est monolithique et formé en matériau composite. L'utilisation d'un matériau composite pour former la « carrosserie extérieure » du véhicule automobile est avantageuse dans le sens où un tel matériau permet d'obtenir des formes jusque là difficilement atteignables en métal, et ce en une seule pièce. En outre, le matériau composite permet à isopérimètre de pièce de diminuer le poids de 40% à 50% par rapport à l'acier.

Le matériau composite comporte une matrice constituée d'une résine durcie d'un matériau thermoplastique ou thermodurcissable (la matrice est plus généralement en matière plastique), et un ensemble de fibres. En particulier, la matrice, ou résine, peut être de type epoxy (thermodurcissable). Les fibres peuvent se présenter sous la forme d'un mat de verre ou d'un tissage sec de type « sergé », ou « Taffetas », ou « Satin » à base de fibres de carbone. Dans le cas de l'utilisation du carbone, pour former un tissage, les fils sont en fait des torons dont la taille est de l'ordre de 6K (6000 fibres de carbone par toron). Selon une réalisation, il peut être préféré un mat à base de carbone en plusieurs couches ou plis. Alternativement, il peut aussi être utilisé un matériau pré-imprégné appelé « pré-preg » au lieu du matériau avec tissage sec et résine epoxy. Il est aussi possible de cumuler plusieurs matériaux composites au sein de la caisse en modifiant les fibres, les tissages, les résines. Dans tous les cas, l'homme du métier devra prendre en compte certains paramètres comme les températures d'utilisation, la reprise d'humidité, les dilatations, etc.

Toutes les pièces en matériau composite visées dans la présente description peuvent être obtenues par des procédés de fabrications tels que le RTM (de l'anglais « Resin Transfert Moulding ») ou le HP-RTM (de l'anglais « High Pressure Resin Transfert Moulding »). Il s'agit de procédés connus utilisés pour fabriquer des pièces à cadence moyenne ou élevée. D'autres procédés peuvent bien entendu aussi être envisagés comme par exemple le SMC (de l'anglais « Sheet Moulding Componant ») ou le thermoformage ou thermoestampage.

Comme évoqué précédemment, l'élément d'habillage 11 est destiné à être monté sur une face d'un côté de caisse orientée vers l'extérieur du véhicule.

Enfin, l'élément d'habillage 11 est configuré pour former un habillage du montant de baie 2 du véhicule automobile (partie 12 de la figure 3) et d'au moins une partie du brancard 6 du véhicule automobile s'étendant dans le prolongement du montant de baie 2 (partie 13 de la figure 3). Autrement dit, une même pièce monolithique vient former l'enveloppe extérieure du montant de baie 2 et de ladite au moins une partie du brancard. Ceci permet de limiter le nombre de pièces lors de l'assemblage du véhicule, et permet de procurer un aspect extérieur au véhicule sans zone de raccordement disgracieuses entre le montant de baie 2 et le brancard 6.

L'élément d'habillage 11 peut être une pièce d'interface avec les éléments constitutifs du toit du véhicule, comme par exemple le pavillon de toit, une traverse de liaison d'une paire sensiblement parallèle d'éléments d'habillage, un dispositif d'écoulement d'eau, ou un module de toit ouvrant. Dans ce but, l'élément d'habillage peut délimiter une feuillure de liaison pour tout ou partie des éléments susmentionnés.

Plus particulièrement, l'élément d'habillage 11 présente une longueur telle qu'assemblé au véhicule automobile, il se prolonge à minima jusqu'à une zone d'interface avec le pied milieu 8 de la caisse du véhicule automobile, et notamment à maxima jusqu'à une gouttière arrière 10 d'une porte de coffre du véhicule automobile.

En fait, pour un véhicule automobile ne comportant de chaque côté qu'une porte latérale, l'élément d'habillage 11 s'étend de sorte à former un habillage du montant de baie 2 et du brancard 6 jusqu'au pied milieu. Pour un véhicule comportant de chaque côté deux portes latérales, l'élément d'habillage 11 s'étend de sorte à former un habillage du montant de baie 2 et du brancard 6 au moins jusqu'au pied milieu 8 voir jusqu'au à pied arrière ou au-delà.

L'utilisation du matériau composite pour former l'élément d'habillage 11 donne, outre sa fonction d'aspect, de nouvelles propriétés à ce dernier. En effet, le matériau composite présente des propriétés structurelles pouvant dépasser les caractéristiques mécaniques des meilleurs aciers à très haute limites élastiques. En ce sens, des efforts peuvent être repris par l'élément d'habillage 11. L'élément d'habillage 11 présente localement des épaisseurs différentes et/ou des zones de compositions différentes du matériau composite (par exemple nombre de plis différents, différence de matériaux, etc.). Le choix peut être fonction, des tenues mécaniques envisagées comme une zone d'absorption, une zone de raideur, ou une zone d'aspect.

Il peut donc être avantageux de tirer partie des propriétés de cette nouvelle pièce d'habillage 11. Par exemple, l'élément d'habillage 11 peut être, ou comporter, une barre longitudinale destinée au transport d'objets au-dessus d'un pavillon de toit du véhicule automobile notamment tout en étant une pièce d'aspect contribuant au style du véhicule. Dans cet exemple, la barre de toit vient de matière commune avec l'élément d'habillage 11 puisque ce dernier est une pièce monolithique. Alternativement, des inserts peuvent être montés à l'élément d'habillage pour assurer la fonction d'organes de fixation de la barre longitudinale.

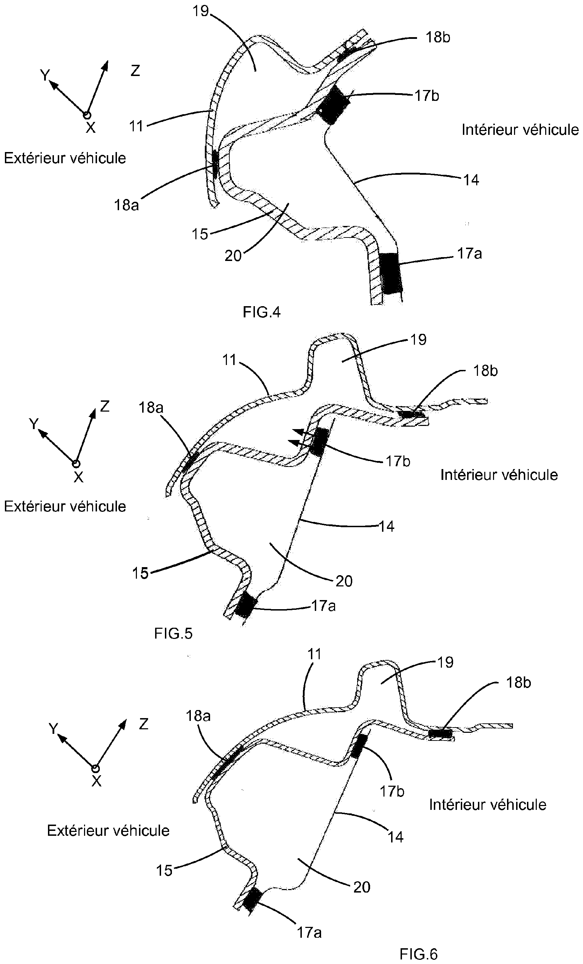

On comprend de ce qui a été dit précédemment que l'invention est aussi relative à un agencement pour véhicule automobile. Un agencement est un dispositif comprenant plusieurs pièces assemblées les unes par rapport aux autres. Les figures 4 à 7 illustrent différentes coupes de la figure 2 permettant de visualiser ledit agencement.

En particulier, l'agencement pour véhicule automobile comprend le montant de baie 2 et ladite au moins une partie du brancard 6 s'étendant dans le prolongement du montant de baie 2. Par ailleurs, le montant de baie 2 et ladite au moins une partie du brancard 6 sont formés par au moins: une doublure de côté de caisse 14 ; un côté de caisse 15, assemblé à la doublure de côté de caisse 14 ; et l'élément d'habillage 11 monolithique en matériau composite assemblé sur une face du côté de caisse 15 orientée vers l'extérieur du véhicule automobile. Autrement dit, depuis l'intérieur du véhicule automobile, on retrouve successivement la doublure 14, le côté de caisse 15 puis l'élément d'habillage 11.

Le côté de caisse 15 et/ou la doublure de côté de caisse 14 peuvent chacun être par exemple monolithique, et/ou notamment en matériau composite. Il en résulte qu'il est plus facile d'assembler une partie latérale supérieure du véhicule automobile avec moins de pièces, et des formes jusque là difficilement atteignables dans le domaine des pièces aciers. L'utilisation du matériau composite pour former en outre le côté de caisse et la doublure de côté de caisse participe à une volonté d'améliorer la légèreté de la caisse du véhicule automobile.

Selon une réalisation où l'élément d'habillage 11, le côté de caisse 15 et la doublure de côté de caisse 14 sont chacun formés en une pièce monolithique en matériau composite, le côté de caisse 15 peut présenter une épaisseur comprise entre 2,5 mm et 4 mm, la doublure de côté de caisse 14 peut présenter une épaisseur comprise entre 2,5 mm et 4 mm, et l'élément d'habillage 11 peut présenter une épaisseur de l'ordre de 2,5 mm. Par ailleurs, l'élément d'habillage 11 peut servir à la fixation d'éléments constitutifs du toit du véhicule, comme par exemple le pavillon de toit ou des éléments structurels du type traverse de liaison des élément d'habillage entre eux, comme cela est le cas d'une traverse avant, centrale ou arrière. L'élément d'habillage 11 peut être formé par une ou plusieurs pièces en matériau composite, et présenter une épaisseur comprise entre 1,5mm et 4mm. Bien entendu ces épaisseurs peuvent être variables par exemple par augmentation de plis du matériau composite par zone et par pièces.

Pour limiter les coûts de fabrication, le même matériau composite peut être utilisé pour former l'élément d'habillage 11, le côté de caisse 15 et la doublure de côté de caisse 14.

De préférence, la doublure de côté de caisse 14, le côté de caisse 15 et l'élément d'habillage 11 sont assemblés entre eux par collage. Notamment, le collage est préféré lorsque les pièces à coller sont en matériau composite. Lorsque l'une des pièces est en métal alors que l'autre est en matériau composite, l'assemblage peut s'effectuer par collage ou par tout autre procédé d'assemblage approprié, tel que le clinchage, le rivetage ou équivalent. Ainsi, selon une réalisation, la doublure de côté de caisse 14 est assemblée au côté de caisse 15 par l'intermédiaire d'au moins un premier cordon 17a de colle de liaison, et l'élément d'habillage 11 est assemblé au côté de caisse 15 par l'intermédiaire d'au moins un deuxième cordon de colle de liaison 18a.

La colle utilisée peut être différente en fonction des matériaux à assembler, du temps de fabrication à respecter et des contraintes mécaniques résultantes.

En particulier, la colle utilisée peut être une colle à bi-composant et à base de polyuréthane. Les colles polyuréthane sont basées sur la chimie des Polyisocyanates et Polyéther / Polyols polyesteriques. Elles existent en structure mono ou bi-composants. Les colles monocomposant réagissent à l'humidité de l'air et peuvent être appliquées à température ambiante ou à température élevée comme pour les colles thermoplastiques. Les colles bi-composants doivent être mélangées selon des proportions précises avant utilisation. Des traitements de surfaces sont possibles et voire nécessaires dans certains cas : Primaire à déposer, opération dite « plasma » ou « corona », ou opération de ponçage ou de grattage par exemple.

En particulier, les premier et deuxième cordons de colle de liaison 17a, 18a sont disposés de manière à minimiser l'encombrement de l'agencement au moins au niveau du montant de baie 2, notamment les premier et deuxième cordons de colle de liaison 17a, 18a au niveau du montant de baie 2 sont décalés de part et d'autre d'un axe parallèle à un axe transversal X au véhicule automobile dans une configuration où l'agencement intègre le véhicule automobile.

Sur les figures 4 à 7, deux premiers cordons de colle de liaison 17a, 17b permettent de coller la doublure de côté de caisse 14 au coté de caisse 15, et deux deuxièmes cordons de colle de liaison 18a, 18b permettent de coller le côté de caisse 15 à l'élément d'habillage 11. Les premiers et deuxièmes cordons de colle sont tous collés au moins au côté de caisse 15, et sont disposés de telle manière à être en quinconce selon les coupes transversales (selon le plan YZ), et ce au moins au niveau du montant de baie 2. Selon une autre formulation, au moins au niveau du montant de baie 2, chaque premier cordon de colle 17a, 17b, ou au moins l'un des premiers cordons de colle 17a, 17b, présente une face de contact avec le côté de caisse 15, et en tout point de la face de contact la droite normale à ladite face de contact et passant par ledit point ne présente pas d'intersection avec le deuxième cordon de colle 18a ou au moins un des deuxièmes cordons de colle 18a. Alternativement, la droite normale passant par chacun des premiers cordons de colle 17a, 17b ne présente pas d'intersection avec chacun des deuxièmes cordons de colle 18a, 18b.

Dans le cadre de l'agencement, comme évoqué précédemment, ladite au moins une partie du brancard 6 peut s'étendre d'une extrémité du montant de baie 2 située à l'interface avec une traverse supérieure 5 de baie et se prolonge à minima jusqu'à une zone d'interface avec un pied milieu 8 de la caisse du véhicule automobile, et notamment à maxima jusqu'à une gouttière arrière 10 de la porte de coffre.

Selon une mise en œuvre, l'élément d'habillage 11 peut aussi être une pièce de renfort participant à l'absorption des chocs en cas d'accident. Dans ce cas, ledit élément d'habillage 11 délimite avec le côté de caisse 15 au moins un corps creux 19. Sur les figures 4 à 7, on peut voir que le corps creux 19 est délimité par l'élément d'habillage 11 et le côté de caisse 15, et notamment les deux deuxièmes cordons de colle de liaison 18a, 18b qui peuvent s'étendre tout le long de l'élément d'habillage 11. On comprend des figures 4 à 7 que ledit corps creux 19 peut s'étendre entre les deux extrémités longitudinales de l'élément d'habillage 11. Le côté de caisse 15 peut délimiter un corps creux 19 avec l'élément d'habillage 11, et notamment les deux deuxièmes cordons de colle de liaison 18a, 18b qui peuvent s'étendre tout le long de l'élément d'habillage 11. Toujours dans le but d'améliorer la résistance du véhicule automobile en cas de choc, le côté de caisse 15 peut délimiter un autre corps creux 20 avec la doublure de côté de caisse 14, et notamment les deux premiers cordons de colle de liaison 17a, 17b qui peuvent s'étendre tout le long de l'élément d'habillage 11. En particulier, les deux corps creux 19 et 20 sont séparés par une paroi formée par le côté de caisse 15.

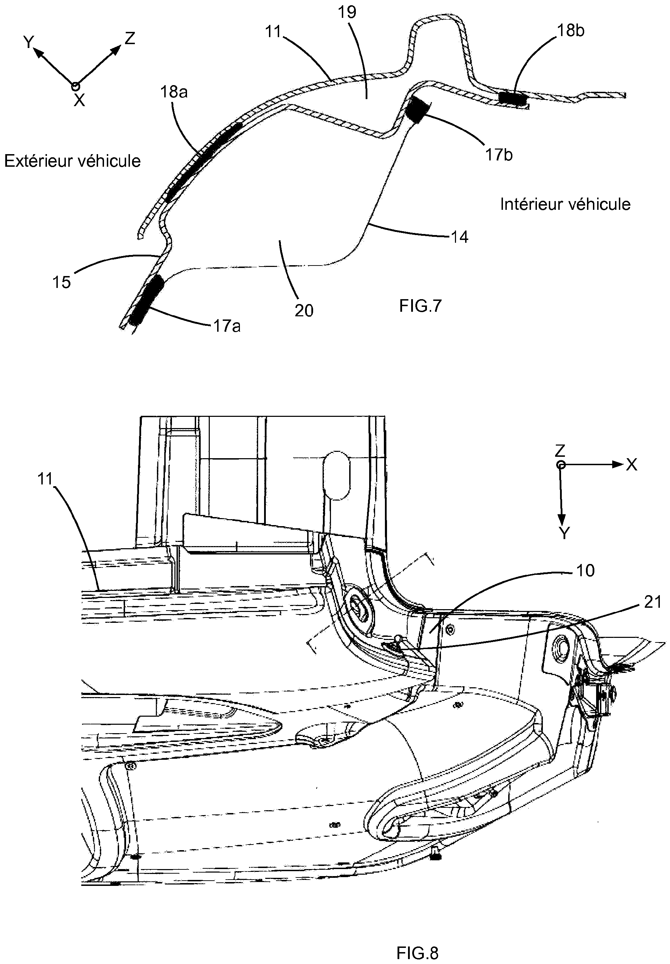

On a évoqué précédemment que l'élément d'habillage 11 permettait d'apporter une rigidité supplémentaire à la caisse du véhicule automobile. En ce sens, des inserts peuvent être montés à la pièce d'habillage pour fixer des pièces additionnelles comme le moyen de portage formé par exemple par la barre toit telle qu'évoquée plus tôt. Selon une réalisation illustrée en figure 8, lorsque l'élément d'habillage 11 s'étend jusqu'à la gouttière arrière 10 de la porte de coffre du véhicule automobile, un insert muni d'une rotule 21 peut être fixé audit l'élément d'habillage pour autoriser le montage d'une béquille ou vérin, notamment hydraulique, de porte de coffre. Lorsqu'un insert métallique est fixé à l'élément d'habillage 11, ou à toute pièce en matériau composite, ce dernier est préférentiellement recouvert d'une couche de résine protectrice pour vaincre les effets électrochimiques (effet pile). Les inserts peuvent être métallique ou en matériau composite. Les inserts peuvent adopter une forme d'écrou, de plaquette, de romaine, etc.

Bien entendu, l'invention est aussi relative à un véhicule automobile comportant un agencement tel que décrit.

En particulier, un procédé d'assemblage d'un agencement tel que décrit comporte les étapes suivantes: une fourniture du côté de caisse 15, notamment en matériau composite ; une fourniture de la doublure de côté de caisse 14, notamment en matériau composite; une première étape d'assemblage pour former un ensemble comprenant la doublure de côté de caisse 14 fournie assemblée avec le côté de caisse 15 fourni ; une fourniture de l'élément d'habillage 11 monolithique en matériau composite ; une deuxième étape d'assemblage comprenant l'assemblage de l'élément d'habillage 11 fourni sur l'ensemble, ledit élément d'habillage 11 fourni étant assemblé sur une face du côté de caisse 15 orientée vers l'extérieur du véhicule automobile.

Un tel procédé d'assemblage, lorsqu'il est mis en œuvre sur une unité de production d'un véhicule automobile permet d'obtenir une partie latérale du véhicule automobile. Autrement dit, il peut être mis en œuvre deux fois pour obtenir une unité gauche de caisse et une unité droite de caisse qui seront par la suite assemblées au reste de la caisse du véhicule automobile, par exemple ces unités gauche et droite sont réunies par la fixation de traverses et d'un pavillon de toit.

Il résulte de ce qui a été dit précédemment que l'assemblage de la doublure de côté de caisse 14 avec le côté de caisse 15 utilise de la colle et que l'assemblage du côté de caisse 15 avec l'élément d'habillage 11 utilise aussi de la colle. Durant les différentes étapes, les zones de collage peuvent être clairement définies pour éviter les contacts et raclages lors du rapprochement de deux pièces à coller. Les jeux de collage (entrefer entre les pièces à coller) peuvent être définis de la manière suivante :
- jeu de 1mm entre deux pièces collées d'une même unité,
- jeu de 2mm entre deux unités.

Ces valeurs peuvent bien entendu être affinées en fonction des retours géométriques en sortie de fabrication du véhicule automobile.

Afin de faciliter l'assemblage, il est possible d'intégrer aux pièces à assembler des fonctions de pilote ou des fixations de pré-maintien. Cette aide peut être précieuse lors de l'assemblage puisque la réticulation de la colle doit se faire le plus rapidement possible, et en accord avec la cadence de fabrication. En ce sens, les éventuelles fixations de pré-maintien peuvent être en adéquation pour permettre une réticulation à plus long terme sans fausser la géométrie de l'ensemble.

Selon une réalisation particulière, le procédé d'assemblage utilisant de la colle, il est réalisé une étape de chauffe pour d'accélérer le processus de réticulation de la colle, et pour figer une géométrie de caisse. A titre d'exemple, la température de chauffe utilisée lors de l'étape de chauffe peut être de 80°C pendant 20 min. De préférence, cette étape de chauffe est réalisée après avoir encollé les différentes pièces à assembler (élément d'habillage, doublure de côté de caisse et côté de caisse).

L'élément d'habillage 11 peut être obtenu à parti d'un moule dans lequel il sera réalisé un drapage (formation des plis) avant de le refermer pour y injecter la matrice. Lors du drapage, il est aussi possible de déposer des inserts dans le moule : il résultera de la sortie du moule la formation de l'élément d'habillage 11 sur lequel sont fixés un ou plusieurs inserts.

Bien entendu, l'emploi de matériau composite dans une caisse doit être en adéquation avec les tenues de la caisse : mécaniques, vibratoire, acoustiques. Le recours à un élément d'habillage réalisé en matériau composite dans un véhicule permet d'en alléger son poids. En outre, un tel élément d'habillage est une pièce structurelle qui permet de concevoir certains allégements de la structure en acier, notamment par une réduction des épaisseurs de matière ou de leur section des profilés.

## Revendications

1. Elément d'habillage (11) pour véhicule automobile, l'élément d'habillage (11) étant monolithique et destiné à être monté sur une face d'un côté de caisse orientée vers l'extérieur du véhicule, et configuré pour former un habillage d'un montant de baie (2) du véhicule automobile et d'au moins une partie d'un brancard (6) du véhicule automobile s'étendant dans le prolongement du montant de baie (2), l'élément d'habillage (11) étant **caractérisé en ce qu'**il est formé en matériau composite et **en ce qu'**il présente localement des épaisseurs différentes et/ou des zones de compositions différentes du matériau, et **en ce que** le matériau composite comporte une matrice constituée d'une résine durcie d'un matériau thermoplastique ou thermodurcissable, et un ensemble de fibres.

2. Elément d'habillage (11) selon la revendication 1, **caractérisé en ce qu'**il présente une longueur telle qu'assemblé au véhicule automobile il se prolonge à minima jusqu'à une zone d'interface avec un pied milieu (8) de la caisse du véhicule automobile, et notamment à maxima jusqu'à une gouttière arrière (10) d'une porte de coffre du véhicule automobile.

3. Elément d'habillage (11) selon l'une quelconque des revendications précédentes, **caractérisé en ce qu'**il comporte, ou il est, une barre longitudinale destinée au transport d'objets au-dessus d'un pavillon de toit du véhicule automobile, notamment tout en étant une pièce d'aspect contribuant au style du véhicule.

4. Agencement pour véhicule automobile comprenant un montant de baie (2) et au moins une partie d'un brancard (6) s'étendant dans le prolongement du montant de baie (2), **caractérisé en ce que** le montant de baie (2) et ladite au moins une partie du brancard (6) sont formés par au moins :
- une doublure de côté de caisse (14), notamment en matériau composite,
- un côté de caisse (15), notamment en matériau composite, assemblé à la doublure de côté de caisse (14),
- un élément d'habillage (11) selon l'une quelconque des revendications 1 à 3 assemblé sur une face du côté de caisse (15) orientée vers l'extérieur du véhicule.

5. Agencement selon la revendication précédente, **caractérisé en ce que** la doublure de côté de caisse (14) est assemblée au côté de caisse (15) par l'intermédiaire d'au moins un premier cordon de colle de liaison (17a), et **en ce que** l'élément d'habillage (11) est assemblé au côté de caisse (15) par l'intermédiaire d'au moins un deuxième cordon de colle de liaison (18a).

6. Agencement selon la revendication précédente, caractérisé en ce les premier et deuxième cordons de colle de liaison (17a, 18a) sont disposés de manière à minimiser l'encombrement de l'agencement au moins au niveau du montant de baie (2), les premier et deuxième cordons de colle (17a, 18a) au niveau du montant de baie (2) sont décalés de part et d'autre d'un axe parallèle à un axe transversal au véhicule automobile dans une configuration où l'agencement intègre le véhicule automobile.

7. Agencement selon la revendication précédente, **caractérisé en ce qu'**au moins au niveau du montant de baie (2), chaque premier cordon de colle (17a, 17b), ou au moins l'un des premiers cordons de colle (17a, 17b), présente une face de contact avec le côté de caisse (15), et en tout point de la face de contact la droite normale à ladite face de contact et passant par ledit point ne présente pas d'intersection avec le deuxième cordon de colle (18a) ou au moins l'un des deuxièmes cordons de colles (18a, 18b), et préférentiellement avec chacun des deuxièmes cordons de colle (18a, 18b).

8. Agencement selon l'une quelconque des revendications 4 à 6, **caractérisé en ce que** ladite au moins une partie du brancard s'étend d'une extrémité du montant de baie (2) située à l'interface avec une traverse supérieure (5) de baie et se prolonge à minima jusqu'à une zone d'interface avec un pied milieu (8) de la caisse du véhicule automobile, et notamment à maxima jusqu'à une gouttière arrière (10) de la porte de coffre.

9. Agencement selon l'une quelconque des revendications 4 à 7, **caractérisé en ce que** le côté de caisse (15) est une pièce en matériau composite, notamment monolithique, et/ou **en ce que** la doublure de côté de caisse (14) est une pièce en matériau composite, notamment monolithique.

10. Agencement selon l'une quelconque des revendications 4 à 8, **caractérisé en ce que** l'élément d'habillage (11) est aussi une pièce de renfort participant à l'absorption des chocs en cas d'accident, ledit élément d'habillage (11) délimitant avec le côté de caisse au moins un corps creux (19).

11. Véhicule automobile comportant un agencement selon l'une quelconque des revendications 4 à 10.

12. Procédé d'assemblage d'un agencement selon l'une quelconque des revendications 4 à 10, **caractérisé en ce qu'**il comporte les étapes suivantes :
- Une fourniture du côté de caisse (15) de l'agencement, notamment en matériau composite,
- Une fourniture de la doublure de côté de caisse (14) de l'agencement, notamment en matériau composite,
- Une première étape d'assemblage pour former un ensemble comprenant la doublure de côté de caisse (14) fournie assemblée avec le côté de caisse (15) fourni,
- Une fourniture de élément d'habillage (11) monolithique en matériau composite de l'agencement,
- Une deuxième étape d'assemblage comprenant l'assemblage de l'élément d'habillage (11) fourni sur l'ensemble, ledit élément d'habillage (11) fourni étant assemblé sur une face du côté de caisse (15) orientée vers l'extérieur du véhicule automobile.

## Patentansprüche

1. Verkleidungselement (11) für ein Kraftfahrzeug, wobei das Verkleidungselement (11) monolithisch und dazu bestimmt ist, auf einer Fläche eines Karosserieseitenteils, die nach außen vom Fahrzeug weist, montiert zu werden, und konfiguriert ist, um eine Verkleidung eines Fensterpfostens (2) des Kraftfahrzeugs und mindestens eines Abschnitts einer seitlichen Dachreling (6) des Kraftfahrzeugs zu bilden, die sich in der Verlängerung des Fensterpfostens (2) erstreckt, wobei das Verkleidungselement (11) **dadurch gekennzeichnet ist, dass** es aus einem Verbundmaterial gebildet ist und dass es lokal unterschiedliche Dicken und/oder Bereiche unterschiedlicher Materialzusammensetzung aufweist, und dass das Verbundmaterial eine Matrix umfasst, die aus einem gehärteten Harz aus einem thermo- oder duroplastischen Material und einem Satz von Fasern besteht.

2. Verkleidungselement (11) nach Anspruch 1, **dadurch gekennzeichnet, dass** es eine solche Länge aufweist, dass es sich, wenn es am Kraftfahrzeug montiert ist, mindestens bis zu einem Grenzflächenbereich mit einem Mittelfuß (8) der Kraftfahrzeugkarosserie und insbesondere höchstens bis zu einer hinteren Rinne (10) einer Kofferraumtür des Kraftfahrzeugs erstreckt.

3. Verkleidungselement (11) nach einem der vorhergehenden Ansprüche, **dadurch gekennzeichnet, dass** es eine Längsstange zum Transport von Gegenständen über einem Dachhimmel des Kraftfahrzeugs umfasst oder aus dieser besteht, insbesondere, während es als Zierteil fungiert, das zum Stil des Fahrzeugs beiträgt.

4. Anordnung für ein Kraftfahrzeug, umfassend einen Fensterpfosten (2) und mindestens einen Abschnitt einer seitlichen Dachreling (6), der sich in der Verlängerung des Fensterpfostens (2) erstreckt, **dadurch gekennzeichnet, dass** der Fensterpfosten (2) und der mindestens eine Abschnitt der seitlichen Dachreling (6) durch mindestens Folgendes gebildet sind:
- eine Füllung eines Karosserieseitenteils (14), insbesondere aus Verbundmaterial,
- ein Karosserieseitenteil (15), insbesondere aus Verbundmaterial, das an der Füllung eines Karosserieseitenteils (14) montiert ist,
- ein Verkleidungselement (11) nach einem der Ansprüche 1 bis 3, das auf einer Fläche des Karosserieseitenteils (15) montiert ist, die nach außen vom Fahrzeug weist.

5. Anordnung nach dem vorhergehenden Anspruch, **dadurch gekennzeichnet, dass** die Füllung des Karosserieseitenteils (14) über mindestens einen ersten Haftklebestreifen (17a) an dem Karosserieseitenteil (15) montiert ist, und dass das Verkleidungselement (11) über mindestens einen zweiten Haftklebestreifen (18a) an dem Karosserieseitenteil (15) montiert ist.

6. Anordnung nach dem vorhergehenden Anspruch, **dadurch gekennzeichnet, dass** die ersten und zweiten Haftklebestreifen (17a, 18a) so angeordnet sind, dass der Platzbedarf der Anordnung zumindest am Fensterpfosten (2) minimiert wird, die ersten und zweiten Haftklebestreifen (17a, 18a) am Fensterpfosten (2) auf beiden Seiten einer Achse parallel zu einer Achse quer zum Kraftfahrzeug in einer Konfiguration versetzt sind, in der die Anordnung das Kraftfahrzeug integriert.

7. Anordnung nach dem vorhergehenden Anspruch, **dadurch gekennzeichnet, dass** zumindest am Fensterpfosten (2) jeder erste Haftklebestreifen (17a, 17b) oder mindestens einer der ersten Haftklebestreifen (17a, 17b) eine Kontaktfläche mit dem Karosserieseitenteil (15) aufweist, und dass an jedem Punkt der Kontaktfläche die zu der Kontaktfläche senkrechte Linie, die durch den Punkt verläuft, sich mit dem zweiten Haftklebestreifen (18a) oder mindestens einem der zweiten Haftklebestreifen (18a, 18b) und vorzugsweise mit jedem der zweiten Haftklebestreifen (18a, 18b) nicht überschneidet.

8. Anordnung nach einem der Ansprüche 4 bis 6, **dadurch gekennzeichnet, dass** sich der mindestens eine Abschnitt der seitlichen Dachreling von einem Ende des an der Grenzfläche mit einem oberen Fensterquerträger (5) angeordneten Fensterpfostens (2) erstreckt und sich mindestens bis zu einem Grenzflächenbereich mit einem Mittelfuß (8) der Kraftfahrzeugkarosserie und insbesondere höchstens bis zu einer hinteren Rinne (10) der Kofferraumtür erstreckt.

9. Anordnung nach einem der Ansprüche 4 bis 7, **dadurch gekennzeichnet, dass** das Karosserieseitenteil (15) ein Teil aus einem Verbundmaterial, insbesondere monolithisch, ist und/oder dass die Füllung des Karosserieseitenteils (14) ein Teil aus einem Verbundmaterial, insbesondere monolithisch, ist.

10. Anordnung nach einem der Ansprüche 4 bis 8, **dadurch gekennzeichnet, dass** das Verkleidungselement (11) auch ein Verstärkungsteil ist, das bei einem Unfall an der Dämpfung von Stößen beteiligt ist, wobei das Verkleidungselement (11) mit dem Karosserieseitenteil mindestens einen Hohlkörper (19) begrenzt.

11. Kraftfahrzeug, umfassend eine Anordnung nach einem der Ansprüche 4 bis 10.

12. Verfahren zur Montage einer Anordnung nach einem der Ansprüche 4 bis 10, **dadurch gekennzeichnet, dass** es die folgenden Schritte umfasst:
- Bereitstellung des Karosserieseitenteils (15) der Anordnung, insbesondere aus Verbundmaterial,
- Bereitstellung der Füllung des Karosserieseitenteils (14) der Anordnung, insbesondere aus Verbundmaterial,
- einen ersten Montageschritt zum Bilden einer Baugruppe, umfassend die Füllung des Karosserieseitenteils (14), die mit dem bereitgestellten Karosserieseitenteil (15) montiert bereitgestellt wurde,
- Bereitstellung des monolithischen Verkleidungselements (11) der Anordnung aus Verbundmaterial,
- einen zweiten Montageschritt, umfassend die Montage des Verkleidungselements (11), das auf der Baugruppe bereitgestellt wurde, wobei das bereitgestellte Verkleidungselement (11) auf einer Fläche des Karosserieseitenteils (15) montiert ist, die nach außen vom Kraftfahrzeug weist.

## Claims

1. Motor vehicle trim element (11), the trim element (11) being monolithic and intended to be mounted on one face of a bodyshell side panel oriented toward the exterior of the vehicle, and configured to form a trim of an A pillar (2) of the motor vehicle and of at least a portion of a roof rail (6) of the motor vehicle forming an extension of the A pillar (2), the trim element (11) being **characterized in that** it is formed of a composite material and that it has locally different thicknesses and/or zones of different compositions of the material and **in that** the composite material includes a matrix consisting of a hardened thermoplastic or thermoset resin and an assembly of fibers.

2. Trim element (11) according to Claim 1, **characterized in that** it has a length such that when fitted to the motor vehicle it extends at least as far as an interface zone with a B pillar (8) of the bodyshell of the motor vehicle and notably at most as far as a rear gutter (10) of a trunk lid of the motor vehicle.

3. Trim element (11) according to either one of the preceding claims, **characterized in that** it includes, or is, a longitudinal bar intended for the transportation of objects above a roof panel of the motor vehicle, in particular whilst being a part the appearance of which contributes to the style of the vehicle.

4. Arrangement for a motor vehicle comprising an A pillar (2) and at least a portion of a roof rail (6) forming an extension of the A pillar (2), **characterized in that** the A pillar (2) and said at least one portion of the roof rail (6) are formed at least by:
- a bodyshell side panel inner skin (14), in particular of composite material,
- a bodyshell side panel (15), in particular of composite material, assembled to the bodyshell side panel inner skin (14),
- a trim element (11) according to any one of claims 1 to 3 assembled to one face of the bodyshell side panel (15) oriented toward the exterior of the vehicle.

5. Arrangement according to the preceding claim, **characterized in that** the bodyshell side panel inner skin (14) is assembled to the bodyshell side panel (15) by means of at least one first bead of bonding glue (17a) and **in that** the trim element (11) is assembled to the bodyshell side panel (15) by means of at least one second bead of bonding glue (18a).

6. Arrangement according to the preceding claim, **characterized in that** the first and second beads (17a, 18a) of bonding glue are disposed in such a manner as to minimize the overall size of the arrangement at least at the level of the A pillar (2), the first and second beads of glue (17a, 18a) at the level of the A pillar (2) are offset on either side of an axis parallel to an axis transverse to the motor vehicle in a configuration in which the arrangement incorporates the motor vehicle.

7. Arrangement according to the preceding claim, **characterized in that** at least at the level of the A pillar (2), each first bead of glue (17a, 17b), or at least one of the first beads of glue (17a, 17b), has a face in contact with the bodyshell side panel (15), and at all points of the contact face the straight line normal to said contact face and passing through said point does not intersect the second bead of glue (18a) or at least one of the second beads of glue (18a, 18b) and preferably does not intersect each of the second beads of glue (18a, 18b) .

8. Arrangement according to any one of Claims 4 to 6, **characterized in that** said at least one portion of the roof rail extends from one end of the A pillar (2) situated at the interface with an upper window crossmember (5) and extends at least as far as an interface zone with a B pillar (8) of the bodyshell of the motor vehicle and in particular at most as far as a rear gutter (10) of the trunk lid.

9. Arrangement according to any one of Claims 4 to 7, **characterized in that** the bodyshell side panel (15) is a composite material, in particular monolithic, part and/or in that the bodyshell side panel inner skin (14) is a composite material, in particular monolithic, part.

10. Arrangement according to any one of Claims 4 to 8, **characterized in that** the trim element (11) is also a reinforcing part participating in absorbing impact in the event of an accident, said trim element (11) delimiting with the bodyshell side panel at least one hollow body (19) .

11. Motor vehicle including an arrangement according to any one of Claims 4 to 10.

12. Method of assembling an arrangement according to any one of Claims 4 to 10, **characterized in that** it includes the following steps:
- procurement of the bodyshell side panel (15) of the arrangement, in particular one made of composite material,
- procurement of the bodyshell side panel inner skin (14) of the arrangement, in particular made of composite material,
- a first assembly step to form an assembly comprising the procured bodyshell side panel inner skin (14) assembled with the procured bodyshell side panel (15),
- procurement of the monolithic composite material trim element (11) of the arrangement,
- a second assembly step comprising the assembly of the procured trim element (11) to the assembly, said procured trim element (11) being assembled on one face of the bodyshell side panel (15) oriented toward the outside of the motor vehicle.
